# EUROPEAN PATENT APPLICATION

(11) **EP 1 728 945 A1**
(43) Date of publication of application: **06.12.2006**
(21) Application number: 05727052.2
(22) Date of filing: 22.03.2005
(51) Int. Cl.: E05B 49/00, B60R 16/02, B60R 25/00, B60R 25/04, G06K 17/00

(54) **IC CARD ADAPTOR DEVICE AND VEHICLE CONTROL DEVICE**

(30) Priority: 22.03.2004 JP 2004082992
(71) Applicant: Matsushita Electric Industries Co., Ltd., Kadoma-shi, Osaka 571-8501 (JP)
(72) Inventor: TAKAMURA, Kimitake, Osaka-shi,Osaka 540-6319 (JP); YUHARA, Masahiro, Osaka-shi,Osaka 540-6319 (JP); AOKI, Harumi, Osaka-shi,Osaka 540-6319 (JP)
(74) Representative: Balsters, Robert
(86) International application number: PCT/JP2005/005108
(87) International publication number: WO 2005/090719

(57) **Abstract**

An IC card adapter apparatus and a vehicle control device which can control a vehicle, and which are convenient to use are provided with using a proximity type IC card that stores personal information for controlling a vehicle are provided. An IC card adapter apparatus has a first communicating unit 9, 6 for reading personal information from an IC card 2 in which personal information is stored; a storage unit 8 in which personal information is previously stored, a second communicating unit 6, 10 for communicating with a vehicle control device mounted on a vehicle, and a control unit 7 for collating the information read from the IC card 2 by the first communicating unit 6, 9 with the information stored in the storage unit 8. When a result of the collation indicates coincidence, allowing the second communicating unit 6, 10 to perform transmitting and receiving operations, thereby transmitting personal information to the vehicle control device.

## Description

### Technical Field

The present invention relates to an IC card adapter apparatus which reads information from an IC card, and a vehicle control device which performs unlocking of a vehicle, starting of an engine, and the like with using the IC card adapter apparatus.

### Background Art

Conventionally, a system in which a vehicle lock is unlocked by a radio key, and a system in which starting of an engine is allowed by a smart key or a smart card are known (for example, see Patent Reference 1). Because of these techniques, in a radio key, the user is not required to directly insert a key into a keyhole in unlocking of a vehicle, and, in a smart key or a smart card, it is not necessary to insert a key into a keyhole in unlocking of a vehicle or starting of an engine. Therefore, the systems are convenient for the user. When the user bears a radio key or a smart key which is used in place of a key, it is possible to automatically unlock a lock when the user approaches the lock, or to start an engine from a position which is slightly separated from a vehicle. Therefore, the convenience of such a key is more improved than a conventional key.

An apparatus is known in which personal information such as a seat position, a steering wheel position, and a mirror position is recorded on an IC card, and the personal information is read by a vehicle control device to control various portions of a vehicle to optimum respective positions for each user (for example, see Patent Reference 2).
Patent Reference 1: JP-A-2003-074238
Patent Reference 2: JP-A-2002-104105

### Disclosure of the Invention

### Problem that the Invention is to Solve

However, it is often that information identifying the user is not stored in an electronic key such as a radio key or a smart key. Even when such information is stored, the information does not include personal information which enables a vehicle to be controlled. On the other hand, it may be considered that an IC card which is to store personal information for controlling a vehicle is provided with a role of an electronic key. In the case where an IC card is of the proximity type (ISO 14443), however, the communicable range is 10 centimeters at most. When such an IC card is used as a smart key or a smart card, therefore, actions of holding the IC card and placing it in the communicable range are required. Consequently, convenience of a conventional smart key or smart card is impaired.

The invention has been conducted in view of the problems. It is an object of the invention to provide an IC card adapter apparatus which can control a vehicle, and which is convenient to use, with using a proximity type IC card in which personal information is stored, and a vehicle control device which uses the adapter apparatus.

### Means for Solving the Problems

The IC card adapter apparatus of the invention comprises: a first communicating unit that reads information from an IC card in which card information and personal information are stored; a storage unit that previously stores the information; a second communicating unit that communicates with a vehicle control device mounted on a vehicle; and
a control unit that collates the information read by the first communicating unit with the information stored in the storage unit, and allows the second communicating unit to perform transmitting and receiving operations when a result of the collation indicates coincidence.

According to the configuration, with using an IC card in which information identifying an individual is stored, card information and personal information stored in the IC card are previously registered in the IC card adapter apparatus to be stored in the storage unit. When an IC card is inserted into the IC card adapter apparatus, information is read from the IC card by the first communicating unit, and it is checked whether the inserted IC card is a previously registered one or not. If it is confirmed that the IC card is a previously registered one, the second communicating unit is allowed to perform transmitting and receiving operations, thereby enabling communication with the vehicle control device. As a result, even when a proximity type IC card is used, the IC card can communicate with the vehicle control device via the IC card adapter apparatus, and convenience of use can be improved. If it is not confirmed that the IC card is a previously registered one, the use of the IC card is disabled. In the state where an IC card is not inserted or is extracted, the use is disabled unconditionally. As a result, only a specific IC card which is previously registered can use the IC card adapter apparatus, thereby ensuring security.

The IC card adapter apparatus of the invention is characterized in that the storage unit stores card information and personal information of a plurality of IC cards; and when the result of the collation indicates coincidence, the control unit obtains personal information of each of the IC cards.
According to the configuration, a plurality of persons can share one IC card adapter apparatus. In this case, when each of users inserts an IC card, personal information in the IC card adapter apparatus is automatically switched over depending on the user, and the user can use the IC card adapter apparatus at own setting values without performing an operation of changing setting values on the basis of own personal information. The personal information to be stored in the IC card includes: general information such as enabling/disabling of driving depending on contents of description of a driver's license, and availability of coverage of insurance based on, for example, relationships between the user and the insurance contractor, and the age; and setting information and restriction information for transmitting information such as settings of various portions of a vehicle and taste to a vehicle control device, and enabling a vehicle to conduct control according to the information.

The IC card adapter apparatus of the invention further comprises a slot and a guide that guides the IC card to be inserted into the slot, and an insertion detecting switch that detects the insertion of the IC card to the slot. According to the configuration, the relative position between the IC card adapter apparatus and the IC card can be specified, and the size of a communication antenna of the IC card adapter apparatus, and the electric field strength in communication can be set to the required minimum level. Therefore, the power consumption can be reduced, and the life period of a driving battery for the IC card adapter apparatus 1 can be prolonged. When the position of the IC card cannot be specified, the antenna for the IC card adapter apparatus must have a size which is sufficient for making communicatable in a range where the user will hold the IC card in order to cause the IC card to communicate with the IC card adapter apparatus. This is inconvenient.

The IC card adapter apparatus of the invention is characterized in that the first communicating unit and the second communicating unit conduct communication in different modes. According to the configuration, in the case where the IC card is of the proximity type (ISO 14443), the communicable range between the first communicating unit and the IC card is 10 centimeter at most, and, when short-range radio communication such as Blue Tooth or IR communication is used as the second communicating unit, the communicable range can be largely expanded to about 1 meter to 10 meters, whereby convenience of use can be improved.

The IC card adapter apparatus of the invention is characterized in that at least one of a plurality of restriction information including a setting of entry unlocking of a vehicle, a setting of engine start unlocking, a setting of glove box unlocking, a setting of trunk unlocking, an available time of a vehicle, an available travel distance of a vehicle, and an available number of use of a vehicle is stored in at least one of a readable storage region of the IC card and a readable region of the storage unit. According to the configuration, setting satisfying the taste and request of the user can be done. A third person cannot know the setting contents, and hence it is possible to prevent vehicle theft and unauthorized use from occurring. When there is no writable region in a used IC card, the restriction information may be adequately stored in the IC card adapter apparatus. Alternatively, such use restriction information can use at least one of sets of stored information.

The IC card adapter apparatus of the invention is characterized in that at least one of a plurality of position setting information of a vehicle including a seat position of a vehicle, a steering wheel position, and a mirror position is stored in at least one of a readable storage region of the IC card and a readable region of the storage unit. According to the configuration, setting suitable to the physical size of the user can be done, and hence convenience and comfort of a vehicle can be improved. When there is no writable region in a used IC card, the restriction information may be adequately stored in the IC card adapter apparatus. Alternatively, such setting information can use at least one of sets of stored information.

The IC card adapter apparatus of the invention further comprises an interrupting unit that interrupts access from an outside to an IC card attached to the IC card adapter apparatus. According to the configuration, it is possible to prevent personal information stored in the IC card from leaking to the outside. In some conventional IC cards, when a wrong password is input a predetermined number of times, the cards are made unusable. According to the invention, even when an IC card is unauthorizedly accessed, such a process is not conducted, and hence the IC card is prevented from being made unusable.

The vehicle control device of the invention comprises: a communicating unit that communicates with the IC card adapter apparatus; a storage unit that previously stores information of the IC card adapter apparatus; an interface unit that transmits and receives signals with respect to a plurality of control apparatuses mounted on a vehicle; and a vehicle control unit that collates information of the IC card adapter apparatus obtained by the communicating unit with the information of the IC card adapter apparatus stored in the storage unit, and allows the interface unit to perform transmitting and receiving operations when a result of the collation indicates coincidence. According to the configuration, only an IC card adapter apparatus to which a previously registered IC card is attached is allowed as a communication partner. Therefore, the possibility that the vehicle control device is improperly used by a third person is reduced.

The vehicle control device of the invention is characterized in that the controlled apparatus is an apparatus that controls at least one of an entry lock of a vehicle and an engine start lock. According to the configuration, at least one of an entry lock of a vehicle and an engine start lock can be controlled with using the IC card adapter apparatus to which an IC card is attached.

The vehicle control device of the invention is characterized in that the controlled apparatus is an apparatus that controls at least one of a glove box lock of a vehicle, a trunk lock, an available time of a vehicle, an available travel distance of a vehicle, and an available number of use of a vehicle. According to the configuration, optimum taste setting for each user can be automatically conducted with using the IC card adapter apparatus to which an IC card is attached.

The vehicle control device of the invention is characterized in that the vehicle control unit is an apparatus that controls at least one of a seat position of a vehicle, a steering wheel position, and a mirror position. According to the configuration, optimum position setting for each user can be automatically conducted with using the IC card adapter apparatus to which an IC card is attached.

### Effects of the Invention

In the IC card adapter apparatus of the invention, information read from an IC card by the first communicating unit is collated with the information stored in the storage unit in the apparatus, and, when a result of the collation indicates coincidence, the second communicating unit for communicating with a vehicle control device is allowed to perform transmitting and receiving operations. Even when a proximity type IC card in which the communicable range is short is used, therefore, short-range radio communication with the vehicle control device can be conducted via the IC card adapter apparatus. Consequently, it is possible to provide an IC card adapter apparatus which is convenient to use, and a vehicle control device which uses it.

### Brief Description of the Drawings

[Fig. 1] Fig. 1 is a block diagram showing the configuration of an IC card adapter apparatus according to an embodiment of the invention.
[Fig. 2] Fig. 2 is a block diagram showing the configuration of an ECU (vehicle control device) which uses the IC card adapter apparatus according to the embodiment of the invention.
[Fig. 3] Fig. 3 is a state transition diagram of the IC card adapter apparatus according to the embodiment of the invention.
[Fig. 4] Fig. 4 is a flowchart showing operations of the IC card adapter apparatus according to the embodiment of the invention.
[Fig. 5] Fig. 5 is a flowchart showing operations of the ECU according to the embodiment of the invention.
[Fig. 6] Fig. 6 is a flowchart showing a process of interrupting unauthorized access of the IC card adapter apparatus according to the embodiment of the invention.

### Description of Reference Numerals and Signs

- 1: IC card adapter apparatus

- 1a: slot
- 1b: guide
- 2: IC card
- 3: insertion detecting switch
- 4: CPU
- 5: memory
- 6: communication block
- 7: control unit
- 8: nonvolatile memory
- 9: modulation and demodulation circuit (first communicating unit)
- 10: modulation and demodulation circuit (second communicating unit)
- 11, 12, 13: antenna
- 14: ECU (vehicle control device)
- 15: CPU
- 16: memory
- 17: communication block
- 18: control unit
- 19: nonvolatile memory
- 20: modulation and demodulation circuit
- 21: antenna
- 22: interface circuit
- 23: connector
- 24: controlled apparatus

### Best Mode for Carrying Out the Invention

Hereinafter, the best mode for carrying out the invention will be described with reference to the drawings.

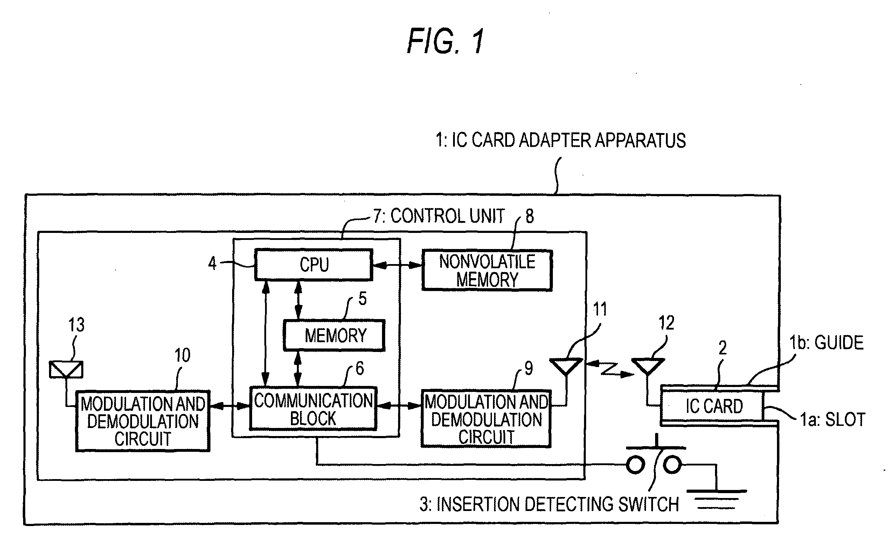

Fig. 1 shows the configuration of an IC card adapter apparatus in an embodiment of the invention. Referring to Fig. 1, an IC card adapter apparatus 1 comprises: a slot 1a into which a proximity type IC card 2 is to be inserted; and a guide 1b which guides the insertion, and an insertion detecting switch 3 which detects the insertion of the IC card 2 is disposed in an inner portion of the guide 1b. The IC card adapter apparatus 1 further comprises a control unit 7 configured by a CPU 4 which controls the whole apparatus, a memory 5, and a communication block 6. A detachable nonvolatile memory 8 in which card information of the IC card 2 and personal information are stored is connected to the CPU 4. Modulation and demodulation circuits 9 and 10 are connected to the communication block 6, an antenna 11 for communicating with an antenna 12 of the IC card 2 is connected to the modulation and demodulation circuit 9 which is a first communicating unit, and an antenna 13 for communicating with an ECU (Electronic Control Unit) correspond to the vehicle control device of the invention is connected to the modulation and demodulation circuit 10 which is a second communicating unit. The antenna 12 of the IC card 2 is placed inside the IC card 2.

As the personal information to be stored in the IC card, general information, for example, enabling/disabling of driving depending on contents of description of a driver's license, and availability of coverage of insurance based on relationships between the user and the insurance contractor, the age, and the like, and restriction information and position setting information for transmitting information such as settings of various portions of a vehicle and taste to the vehicle control device, and enabling the vehicle to conduct control according to the information are stored. The restriction information includes setting of unlocking an entry lock of a vehicle, setting of unlocking an engine start lock, setting of unlocking a glove box lock, setting of unlocking a trunk lock, setting of an available time of the vehicle, setting of an available travel distance of the vehicle, and setting of an available number of use of the vehicle. The position setting information includes a seat position of a vehicle, a steering wheel position, and a mirror position.

The insertion detecting switch 3 detects insertion of the IC card 2. When the IC card 2 is inserted, the switch 3 is operated to activate the IC card adapter apparatus 1, and IC card information is read out via the antenna 12 of the IC card 2 and the antenna 11 connected to the modulation and demodulation circuit 9. A readout signal is demodulated in the modulation and demodulation circuit 9, and decoded in the communication block 6. The insertion detecting switch 3 may be a physical one or an electronic one.

The CPU 4 controls the whole of the IC card adapter apparatus 1, and performs the following processes.
1) When power is turned on, IC card registration data are read out from the nonvolatile memory 8.
2) The insertion state of the IC card 2 is detected by the insertion detecting switch 3.
3) The communication block 6 is activated or deactivated, and the communication block 6 is instructed to "read out IC card information" or "communicate with the ECU 14".
4) The IC card registration data readout from the nonvolatile memory 8 are compared and collated with registration data readout from the IC card 2.
5) In accordance with the result of the collation in 4), the communication block 6 or the modulation and demodulation circuit 10 is activated or deactivated.

The memory 5 comprises a RAM which temporarily stores work data, and a ROM which stores programs for causing the CPU 4 to operate. The card type nonvolatile memory 8 stores the registration data of the IC card 9. The registration data are read out by the CPU 4 at the power-on and the like, and then stored in the RAM. In registration of the IC card 2 and the like, necessary data are written by the CPU 4. It is assumed that also values which are set for each of plural inserted IC cards are written.

In accordance with instructions from the CPU 4, the communication block 6 activates or deactivates the modulation and demodulation circuit 9 and the modulation and demodulation circuit 10. For the sake of convenience, the communication block 6 is configured in one block. Alternatively, it may be combined with the modulation and demodulation circuit 9 or 10 to respectively configure the first communicating unit and the second communicating unit.
In accordance with activation/deactivation instructions from the communication block 6, the modulation and demodulation circuit 9 communicates with the IC card 2. The communication block 6 outputs to the IC card 2 instructions for reading or writing of the IC card 2, and the IC card 2 outputs to the communication block 6 a result of a response to the instructions transmitted from the communication block 6. By contrast, in accordance with activation/deactivation instructions from the communication block 6, the modulation and demodulation circuit 10 communicates with the ECU 14. The ECU 14 issues to the communication block 6 a request for checking of a regular key, and the communication block 6 replies to the request for checking of a regular key from the ECU 14. The regular key described herein means the IC card adapter apparatus 1 itself in a state where it is enabled to be used as a regular key.

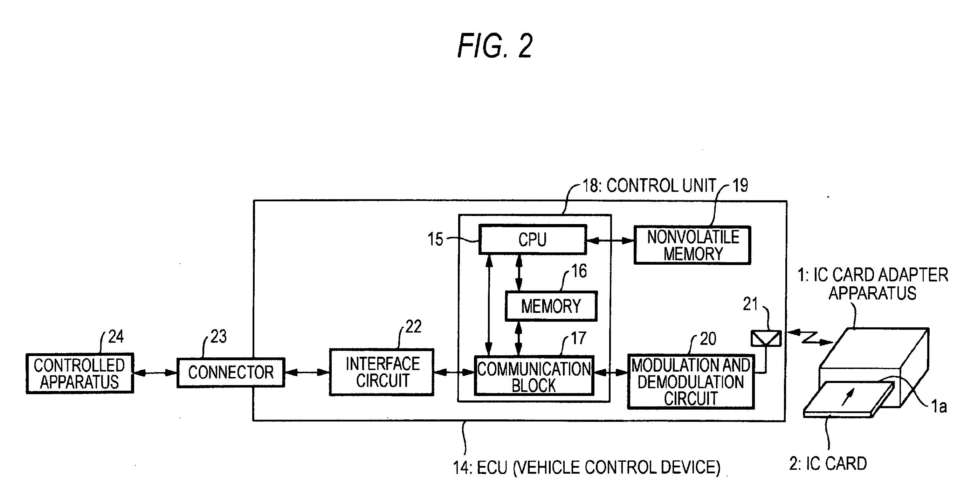

Fig. 2 shows the configuration of the ECU 14 (vehicle control device) which uses the IC card adapter apparatus 1 in the embodiment. Referring to Fig. 2, the ECU 14 comprises a control unit 18 configured by a CPU 15, a memory 16, and a communication block 17. A nonvolatile memory 19 is connected to the CPU 15. A modulation and demodulation circuit 20 which demodulates a radio wave received via an antenna 21 from the IC card adapter apparatus 1, and an interface circuit 22 which is connected to a controlled apparatus 24 of the ECU 14 via a connector 23 are connected to the communication block 17.

The CPU 15 controls the whole of the ECU 14, and performs the following processes.
1) When power is turned on, registration data of the IC card adapter apparatus 1 are read out from the nonvolatile memory 19.
2) The communication block 17 is activated or deactivated, and the communication block 17 is instructed to "read out IC card information" or "communicate with the IC card adapter apparatus 1".
3) The registration data of the IC card adapter apparatus 1 readout from the nonvolatile memory 19 are compared and collated with the registration data readout from the IC card adapter apparatus 1.
4) Communication with the controlled apparatus 24 is conducted via the interface circuit 22 and the connector 23.
5) In accordance with the result of the collation in 3), a collation state is output or replied to the controlled apparatus 24 via the connector 23.

In accordance with instructions from the CPU 15, the communication block 17 activates or deactivates the modulation and demodulation circuit 20 and the interface circuit 22. For the sake of convenience, the communication block 17 is configured in one block. Alternatively, it may cooperate with the modulation and demodulation circuit 20 or the interface circuit 22 to respectively configure blocks. In accordance with activation/deactivation instructions from the communication block 17, the modulation and demodulation circuit 20 conducts short-range radio communication by Blue Tooth or IR, with the IC card adapter apparatus 1 via the antenna 21. The interface circuit 22 is connected between the communication block 17 and the connector 23 to mediate communication between the ECU 14 and the controlled apparatus 24.

The memory 16 comprises a RAM which temporarily stores the registration data of the IC card adapter apparatus that are read out from the nonvolatile memory 19 by the CPU 15, and other work data, and a ROM which stores programs for causing the CPU 15 to operate. The card type nonvolatile memory 19 stores the registration data of the IC card adapter apparatus. The registration data are read out by the CPU 15 of the control unit 18 at the power-on and the like. In registration of the IC card adapter apparatus 1 and the like, the CPU 15 writes the registration data of the IC card adapter apparatus 1.

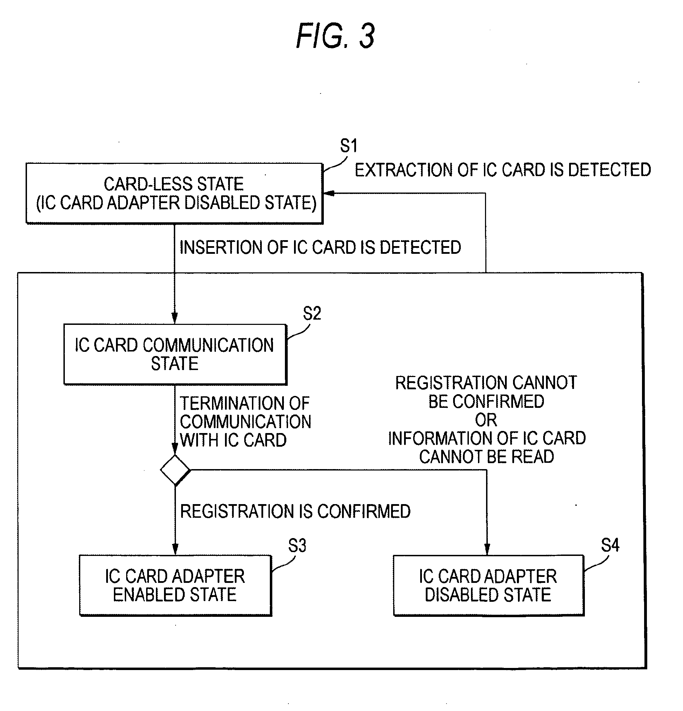

Fig. 3 shows state transition of the IC card adapter apparatus 1 in the embodiment. Referring to Fig. 3, a card-less state S1 is a state where the IC card 2 is extracted from the IC card adapter apparatus 1. When the IC card 2 is inserted under this state, the IC card adapter apparatus 1 transits to an IC card communication state S2 in order to communicate with the IC card 2. When the IC card 2 is extracted in another arbitrary state, the state is unconditionally returned to the card-less state S1 to set the IC card adapter apparatus 1 to a state where it is disabled to be used as a regular key.

The IC card communication state S2 is a state where the IC card adapter apparatus 1 conducts communication with the inserted IC card 2. When the IC card 2 is inserted under the card-less state S1, the apparatus transits to this state. During communication between the IC card adapter apparatus 1 and the IC card 2, when the inserted IC card 2 is confirmed that the IC card is previously registered in the IC card adapter apparatus 1, by a registration number (ID number) of the IC card 2, communication between the IC card adapter apparatus 1 and the IC card 2 is stopped, and the apparatus transits to an IC card adapter apparatus enabled state S3. In communication between the IC card adapter apparatus 1 and the IC card 2, when the inserted IC card 2 is not confirmed for a predetermined time period that the IC card is previously registered in the IC card adapter apparatus 1, communication between the IC card adapter apparatus 1 and the IC card 2 is stopped, and the apparatus transits to an IC card adapter apparatus disabled state S4. It is assumed that, when the IC card 2 is extracted in the state S4, communication between the IC card adapter apparatus 1 and the IC card 2 is compulsively stopped, and the apparatus transits to the card-less state S1.

The IC card adapter apparatus enabled state S3 is a state to which the apparatus transits in the case where it is confirmed that the IC card 2 is previously registered in the IC card adapter apparatus 1, in communication between the IC card adapter apparatus 1 and the IC card 2. In this state, the IC card adapter apparatus 1 can be used as a regular key. When the IC card 2 is extracted in this state, the state unconditionally transits to the card-less state S1 to set the IC card adapter apparatus 1 to a state where it is disabled to be used as a regular key.

The IC card adapter apparatus disabled state S4 is a state to which the apparatus transits in the case where it is not confirmed that the IC card 2 is previously registered in the IC card adapter apparatus 1, in communication between the IC card adapter apparatus 1 and the IC card 2. In this state, the IC card adapter apparatus 1 cannot be used as a regular key. When the IC card 2 is extracted in this state, the state unconditionally transits to the card-less state S1 to cause the IC card adapter apparatus 1 to aggressively transit to a state where it is disabled to be used as a regular key.

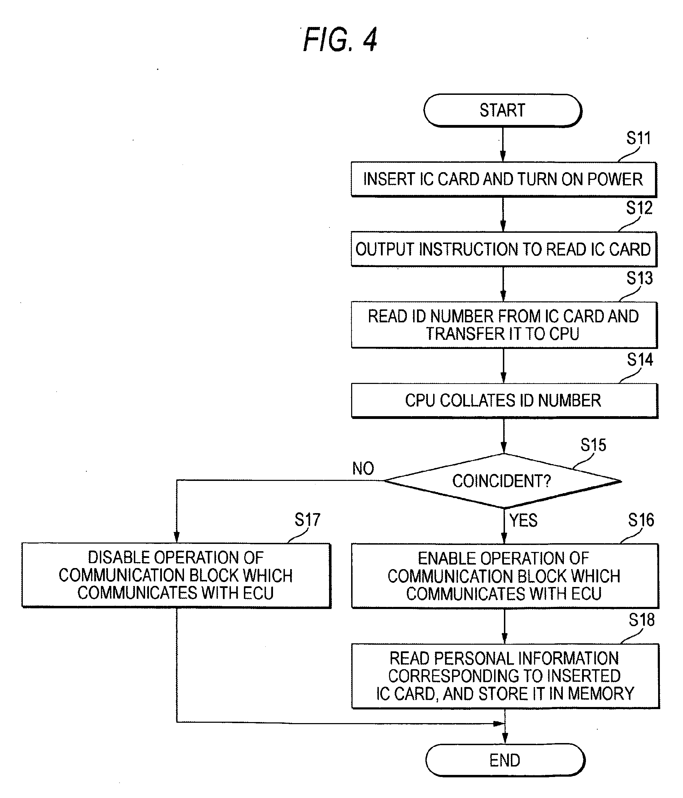

Hereinafter, operations of the IC card adapter apparatus 1 and the ECU 14 which are thus configured will be described. First, operations of enabling the IC card adapter apparatus 1 to be used as a regular key will be described with reference to Fig. 4.
1) When the IC card 2 is inserted into the IC card adapter apparatus 1, the insertion detecting switch 3 disposed in the IC card adapter apparatus 1 operates to power on the IC card adapter apparatus 1 (step S11).
2) The CPU 5 of the control unit 7 outputs to the communication block 6 instructions to read the IC card 2, and the communication block 6 outputs communication actuation instructions to the modulation and demodulation circuit 9 (step S12).
3) The communication block 6 reads out data of the ID number from the IC card 2 via the modulation and demodulation circuit 9, and transfers the readout ID number data to the CPU 5 (step S13). In step S13, the reading and transferring of the apparatus number data may be conducted with being encrypted.
4) The CPU 5 collates the ID number data of the IC card which are previously read out from the nonvolatile memory 8 in power-on or the like, with the ID number data which are read out from the IC card 2 and transferred from the communication block 6 to the CPU 5 (step S14).
5) If a result of the collation indicates coincidence (step S15), the CPU 5 enables the transmitting and receiving operations of the communication block 6 which is to communicate with the ECU 14, to set the IC card adapter apparatus 1 itself to the state where it is enabled to be used as a regular key (step S16). If the result of the collation fails to indicate coincidence, the CPU 5 disables the transmitting and receiving operations of the communication block 6 to set the IC card adapter apparatus 1 itself to the state where it is disabled to be used as a regular key (step S17).
6) In the case where the result of the collation indicates coincidence and the apparatus is set to the state where it is enabled to be used as a regular key, preset values of personal information corresponding to the inserted IC card 2 are read out from the nonvolatile memory 8 and set into the memory 5, and the apparatus enters a waiting state (step S18).

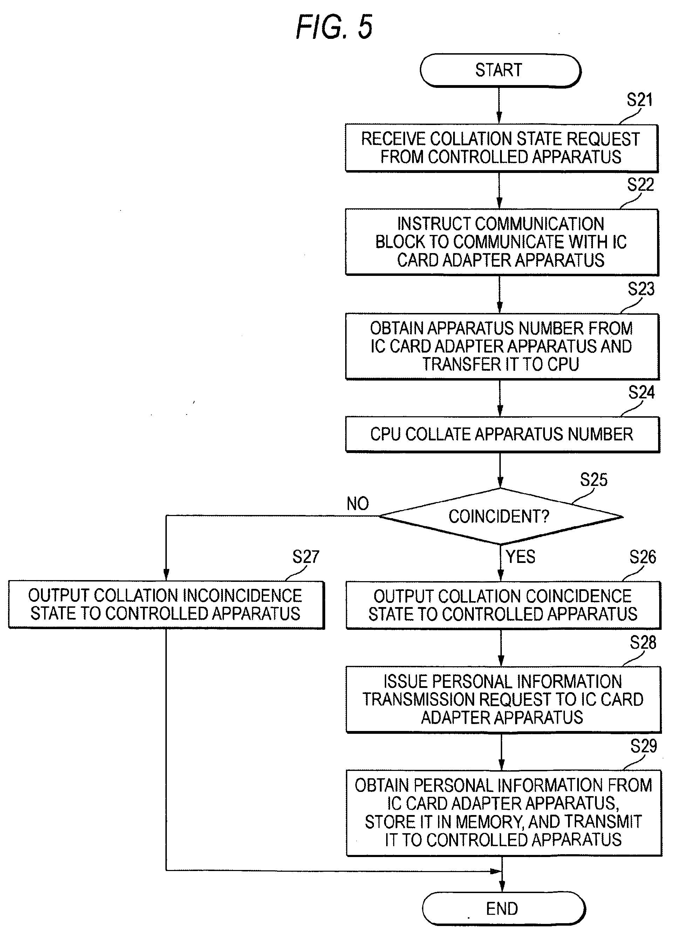

Next, operations of enabling the IC card adapter apparatus 1 to be used as a regular key and the ECU 14 to use the IC card adapter apparatus 1 will be described with reference to Fig. 5.
1) When the controlled apparatus 24 of the vehicle requires personal information data, a collation state confirmation request is issued, and the ECU 14 receives the confirmation request via the connector 23, the interface circuit 22, and the communication block 17 (step S21).
2) Upon reception of the confirmation request from the controlled apparatus 24, the CPU 15 of the control unit 18 outputs to the communication block 17 instructions to communicate with the IC card adapter apparatus 1, and the communication block 17 outputs communication actuation instructions to the modulation and demodulation circuit 20 (step S22).
3) The communication block 17 obtains the apparatus number data from the IC card adapter apparatus 1 via the modulation and demodulation circuit 20, and transfers the data to the CPU 15 (step S23). In step S23, the reading and transferring of the apparatus number data may be conducted with being encrypted.
4) The CPU 15 collates the apparatus number data of the IC card adapter apparatus 1 which are read out from the nonvolatile memory 19, with the apparatus number data which are obtained from the IC card adapter apparatus 1 (step S24).
5) If a result of the collation indicates coincidence (step S25), the CPU 15 outputs a collation coincidence state to the controlled apparatus 24 (step S26), and, if the result of the collation fails to indicate coincidence, outputs a collation incoincidence state (step S27).
6) The ECU 14 which has output the collation coincidence state issues a personal information data transmission request to the IC card adapter apparatus 1 (step S28). The IC card adapter apparatus 1 reads out personal information data corresponding to the inserted IC card 2, from the memory 5, and the communication block 6 transmits the data to the ECU 14 via the modulation and demodulation circuit 10 and the antenna 13.
7) The ECU 14 which has received the personal information data from the IC card adapter apparatus 1 stores once the personal information data into the memory, and transmits necessary personal information data to the controlled apparatus 24 which requests the transmission (step S29).

As a result of the above operations, the controlled apparatus 24 can obtain personal information data which are required for controlling, and the vehicle is controlled on the basis of personal information such as an output of a state of unlicensed driving or non-carrying of a driver's license, enabling/disabling of driving depending on contents of description of a driver's license, and availability of coverage of insurance based on, for example, relationships between the user and the insurance contractor, and the age. Furthermore, an entry lock of the vehicle, an engine start lock, a glove box lock, a trunk lock, an available time of the vehicle, an available travel distance of the vehicle, an available number of use of the vehicle, a seat position of the vehicle, a steering wheel position, a mirror position, and the like are controlled on the basis of personal information for each user.

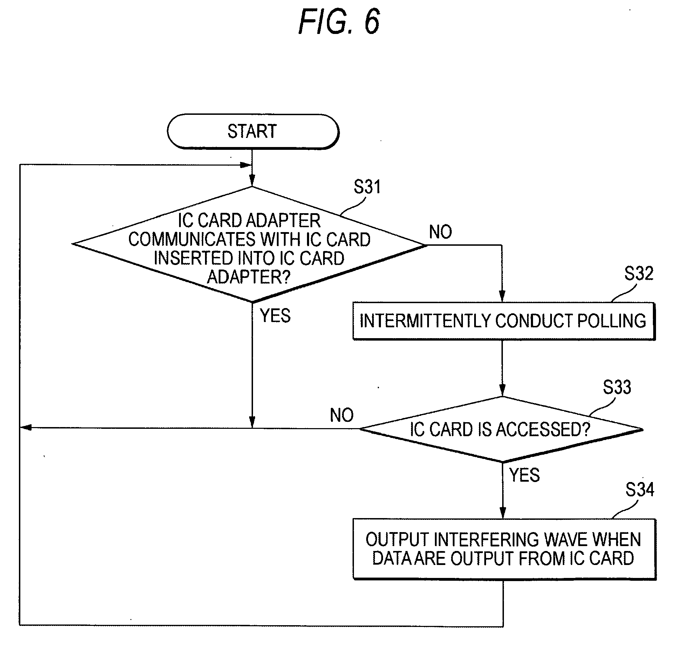

When the IC card 2 inserted into the IC card adapter apparatus 1 is unauthorizedly accessed from the outside and personal information is to be stolen, the access can be interrupted by the method shown in Fig. 6.
1) When the IC card adapter apparatus 1 does not communicate with the inserted IC card 2 (step S31), the apparatus always intermittently conducts polling (confirmation of presence or absence of access to the IC card 2 from the outside) in order to communicate with the IC card 2 (step S32).
2) If, as a result of the polling, an external radio wave communicating with the IC card 2 is detected (step S33), it is judged that the IC card is unauthorizedly accessed from the outside, and, when data are to be output from the IC card 2, an interfering wave is output in order to cause the data not to be normally received by the outside (step S34). It is assumed that, when the IC card adapter apparatus 1 does not communicate with the inserted IC card 2, the apparatus always conducts intermittent polling.

As described above, according to the embodiment, with using the IC card 2 in which information identifying an individual is stored, personal information stored in the IC card 2 is previously registered in the IC card adapter apparatus 1 to be stored in the nonvolatile memory 8. When the IC card 2 is inserted into the IC card adapter apparatus 1, the personal information is read from the IC card 2 by the communication block 6 and the modulation and demodulation circuit 9 which are the first communicating unit, and it is checked whether the inserted IC card 2 is a previously registered one or not. If it is confirmed that the IC card is a previously registered one, the communication block 6 and the modulation and demodulation circuit 10 which are the second communicating unit are allowed to perform transmitting and receiving operations, thereby enabling communication with the ECU 14 which is the vehicle control device. As a result, even when the proximity type IC card 2 storing personal information is used, the IC card can communicate with the ECU 14 via the IC card adapter apparatus 2, and convenience of use can be improved. Furthermore, with using the controlled apparatus 24, vehicle control can be conducted on the basis of the personal information of the IC card 2.
The present application is based on Japanese Patent Application No. 2004-082992 filed on March 22, 2004, and the contents of which are incorporated herein for reference.

### Industrial Applicability

As described above, the IC card adapter apparatus of the invention has an effect that, even when a proximity type IC card in which the communicable range is short is used, convenience of use can be improved. The invention is useful as an IC card adapter apparatus which reads information from an IC card, a vehicle control device which performs unlocking of a vehicle, starting of an engine, and the like with using the IC card adapter apparatus, etc. The invention is applicable also to uses such as identification of the user in entry to a house and handling of a machine in a house.

## Claims

1. An IC card adapter apparatus comprising:
a first communicating unit that reads information from an IC card in which card information and personal information are stored;
a storage unit that previously stores the information;
a second communicating unit that communicates with a vehicle control device mounted on a vehicle; and
a control unit that collates the information read by the first communicating unit with the information stored in the storage unit, and allows the second communicating unit to perform transmitting and receiving operations when a result of the collation indicates coincidence.

2. The IC card adapter apparatus according to claim 1, wherein the storage unit stores card information and personal information of a plurality of IC cards; and
wherein when the result of the collation indicates coincidence, the control unit obtains personal information of each of the IC cards.

3. The IC card adapter apparatus according to claim 1 or 2, further comprising a slot and a guide that guides the IC card to be inserted into the slot; and
an insertion detecting switch that detects the insertion of the IC card into the slot.

4. The IC card adapter apparatus according to any one of claims 1 to 3, wherein the first communicating unit and the second communicating unit conduct communication in different modes.

5. The IC card adapter apparatus according to any one of claims 1 to 4, wherein at least one of a plurality of restriction information including a setting of entry unlocking of a vehicle, a setting of engine start unlocking, a setting of glove box unlocking, a setting of trunk unlocking, an available time of a vehicle, an available travel distance of a vehicle, and an available number of use of a vehicle is stored in at least one of a readable storage region of the IC card and a readable region of the storage unit.

6. The IC card adapter apparatus according to any one of claims 1 to 5, wherein at least one of a plurality of position setting information of a vehicle including a seat position of a vehicle, a steering wheel position, and a mirror position is stored in at least one of a readable storage region of the IC card and a readable region of the storage unit.

7. The IC card adapter apparatus according to any one of claims 1 to 6, further comprising an interrupting unit that interrupts access from an outside to an IC card attached to the IC card adapter apparatus.

8. A vehicle control device comprising:
a communicating unit that communicates with the IC card adapter apparatus according to any one of claims 1 to 7;
a storage unit that previously stores information of the IC card adapter apparatus;
an interface unit that transmits and receives signals with respect to a plurality of control apparatuses mounted on a vehicle; and
a vehicle control unit that collates information of the IC card adapter apparatus obtained by the communicating unit with the information of the IC card adapter apparatus stored in the storage unit, and allows the interface unit to perform transmitting and receiving operations when a result of the collation indicates coincidence.

9. The vehicle control device according to claim 8, wherein the controlled apparatus is an apparatus that controls at least one of an entry lock of a vehicle and an engine start lock.

10. The vehicle control device according to claim 8 or 9, wherein the controlled apparatus is an apparatus that controls at least one of a glove box lock of a vehicle, a trunk lock, an available time of a vehicle, an available travel distance of a vehicle, and an available number of use of a vehicle.

11. The vehicle control device according to any one of claims 8 to 10, wherein the vehicle control unit is an apparatus that controls at least one of a seat position of a vehicle, a steering wheel position, and a mirror position.
